# EUROPÄISCHE PATENTSCHRIFT

(11) **EP 2 912 759 B1**
(45) Veröffentlichungstag und Bekanntmachung des Hinweises auf die Patenterteilung: **25.08.2021**
(21) Anmeldenummer: 13777285.1
(22) Anmeldetag: 17.10.2013
(51) Int. Cl.: H02K 9/20, H02K 9/00

(54) **KÜHLEINRICHTUNG ZUR KÜHLUNG EINER ELEKTRISCHEN MASCHINE SOWIE ENTSPRECHENDE ELEKTRISCHE MASCHINE**
COOLING DEVICE FOR COOLING AN ELECTRICAL MACHINE AND ELECTRICAL MACHINE HAVING SUCH A COOLING DEVICE
SYSTÈME DE REFROIDISSEMENT D'UNE MACHINE ÉLECTRIQUE ET MACHINE ÉLECTRIQUE ÉQUIPÉE D'UN TEL SYSTÈME

(30) Priorität: 25.10.2012 DE 102012020958
(43) Veröffentlichungstag der Anmeldung: 02.09.2015
(73) Patentinhaber: Volkswagen Aktiengesellschaft, 38440 Wolfsburg (DE)
(72) Erfinder: BEHRENDT, Reiner Nico, OT Nitzow D-39539 Havelberg (DE)
(86) Internationale Anmeldenummer: PCT/EP2013/071684
(87) Internationale Veröffentlichungsnummer: WO 2014/063982

(56) Entgegenhaltungen:
- DE-A1- 4 335 848
- DE-A1-102009 027 857
- US-A- 5 818 131
- None

## Beschreibung

Die Erfindung betrifft eine Kühleinrichtung zur Kühlung einer Komponente einer elektrischen Maschine sowie eine elektrische Maschine mit einer solchen Kühleinrichtung.

Elektrische Maschinen (elektromechanische Wandler), beispielsweise elektrische Antriebsmotoren für Kraftfahrzeuge, Starter, Generatoren oder Starter-Generatoren, wandeln elektrische Energie in mechanische Energie (Motoren) beziehungsweise mechanische Energie in elektrische Energie (Generatoren) um. Diese elektromechanische Umwandlung beruht auf elektromagnetischer Induktion. Derartige elektrische Maschinen umfassen einen feststehenden Stator (Ständer), der einen Statorkern und eine darauf aufgebrachte Statorwicklung umfasst, sowie eine beweglich Komponente, die bei dem häufigsten Bautyp als Rotor (Läufer) ausgebildet ist, welcher drehbar in dem ringförmig ausgebildeten Stator gelagert ist. Dabei wird aufgrund des bewegten Magnetfeldes des Rotors ein Stromfluss in der Statorwicklung erzeugt (Generator) beziehungsweise aufgrund des durch den Stator erzeugten Magnetfeldes die mechanische Bewegung/Rotation des Rotors bewirkt (Motor).

Elektrische Maschinen erzeugen während ihres Betriebs Wärme aufgrund des dielektrischen Verlusts. Die Entstehung von Verlustwärme trifft insbesondere auf die Statorwicklung und ganz besonders auf den so genannten Wickelkopf zu. Wickelköpfe von Statoren bestehen in der Regel aus Kupferdrahtwicklungen, die eine durchgängige Primärbeschichtung zur elektrischen Isolierung sowie eine Sekundärbeschichtung zur mechanischen/geometrischen Stabilisierung, zum chemischen Schutz aber auch zur Wärmeableitung aufweisen. Die heute für die höchstmögliche Isolierklasse H eingesetzten Materialien für die Primär- und Sekundärbeschichtung der Statorwicklung sind bis zu Temperaturen von maximal 180 °C belastbar. Im Betrieb können jedoch Temperaturen von über 200 °C im Wickelkopf auftreten. Die Wärme in den Wicklungen entsteht insbesondere durch kurzzeitige Spannungsspitzen, die schnell ansteigen, das heißt eine hohe Flankensteilheit aufweisen. Die Ursache der starken Wärmebildung an den Wickelköpfen liegt darin, dass die seitlichen Wickelschenkel über die dicht anliegenden Statorbleche vergleichsweise gut gekühlt werden können. Hingegen liegt der Wickelkopf meist frei und wird daher nicht aktiv gekühlt. Die Erwärmung führt zu einer Erhöhung des dielektrischen Verlustfaktors, wodurch der Wirkungsgrad verschlechtert und noch mehr elektrische Energie in Wärme umgewandelt wird. Dieser sich selbst beschleunigende Effekt kann zu elektrischen Durchschlägen (Teilentladungen) im Isolationsmaterial der Primärbeschichtung führen. Die Teilentladungen führen zu einer Verkürzung der Lebensdauer der elektrischen Maschine, im schlimmsten Fall sogar zur ihrem Ausfall. Es ist daher erforderlich, elektrische Maschinen und insbesondere ihre Statorwicklung zu kühlen.

Klassische Kühlungen elektrischer Maschinen beruhen auf zirkulierenden, insbesondere flüssigen Kühlmitteln, welche aufgrund ihrer Wärmekapazität die Wärme aufnehmen und abtransportieren, um sie an einem Wärmetauscher wieder abzugeben, ehe sie zumeist mittels Pumpen zur Wärmequelle zurückgeführt werden.

Daneben sind auch Kühlungen bekannt, welche aufgrund der endothermen Verdunstung eines zirkulierenden Kühlmediums eine Kühlung bewirken, wobei die zu kühlende Komponente als Verdunster fungiert und ein Kondensator das Kühlmedium verflüssigt, bevor es wieder der Komponente zugeführt wird. Beispielsweise beschreiben JP 60118037 A und DE 69121054 T2 derartige Kühlsysteme für Statorwicklungen von Elektromotoren, die den Phasenwechsel flüssig-gasförmig ausnutzen.

Ebenfalls den endothermen Phasenübergang von flüssig zu gasförmig machen sich Thermosiphon-Kühlungen zu Nutzen, bei denen die Umwälzung des Kühlmediums passiv aufgrund des Dichteunterschieds zwischen dem flüssigen und dem gasförmigen Medium erfolgt. Thermosiphon-Kühlungen für die Wickelköpfe von Statoren sind aus EP 1547228 B1 und US 6515383 B1 bekannt.

Eine passive Zirkulation eines flüssigen/gasförmigen Mediums erfolgt auch in so genannten Heatpipes (Wärmerohren). Heatpipes enthalten ein, in einem hermetisch abgeschlossenen Volumen (z.B. einem Rohr) befindliches Medium (z.B. Wasser), wobei ein Ende des Rohres mit einer Wärmequelle und das andere mit einer Wärmesenke in Kontakt steht. Das an der Wärmequelle endotherm verdampfende Medium wird aufgrund des Dampfdruckgefälles zur Wärmesenke transportiert, wo es kondensiert und aufgrund von Kapillarkräften wieder zur Seite der Wärmequelle gefördert wird. Heatpipe-Statorkühlungen unterschiedlicher Ausführungen für elektrische Maschinen sind aus DE 10258778 A, US 5,808,387 A, JP 60257739 A und JP 57062754 A bekannt.

Schließlich ist die Verwendung von Latentwärmespeichern in unterschiedlichsten Kühlanwendungen bekannt. Latentwärmespeicher nutzen den reversiblen, endothermen Phasenübergang so genannter Phasenwechselmaterialien (PCM für *phase change material*) zur Speicherung von Wärmeenergie. Am häufigsten wird dabei der Phasenübergang flüssig-fest genutzt, wobei die Wärme beispielsweise in Form von Schmelzwärme oder Lösungswärme gespeichert wird. Als PCM werden etwa Paraffine oder Polymere eingesetzt (EP 2275510 A2, DE 102008027207 A1, EP 2043773 B1), teilweise in gekapselter Form innerhalb eines flüssigen Trägermediums. Für Temperaturen um ca. 100 °C eignen sich Salze, Hydrate von Salzen und deren Mischungen (DD 294964 A5, US 5,818,131 A). Beispielsweise wurden PCMs zur Kühlung von Verbrennungsmotoren (DE 19525661 C2, DE 102008027207 A1), von Brennstoffzellen (DE 10325444 A1) oder zur Kühlung/Temperierung von Fahrzeugbatterien und anderen elektrischen Energiespeichern (DE 102010013150 A1, DE 102010013222 A1) vorgeschlagen.

Darüber hinaus beschreibt WO 03/090254 A2 die Verwendung von Phasenwechselmaterialien zur Kühlung von Elektromotoren oder Generatoren, wobei das PCM in direktem Kontakt zur Wicklung steht, insbesondere in den Wicklungszwischenräumen und der direkten Wicklungsumgebung. Auch DE 102009027857 A1 beschreibt eine, ein PCM enthaltende Kühleinrichtung für eine elektromechanische Vorrichtung, beispielsweise einen Startermotor, wobei die Phasenübergangstemperatur des Materials im Betriebstemperaturbereich der Maschine liegt. Die Kühleinrichtung ist von außen an einem Gehäuse benachbart zum Stator angeordnet oder eine Vielzahl von solchen PCM-Kühleinrichtungen ist innerhalb des Gehäuses zur Kühlung verschiedener Komponenten des Starters vorhanden. Gemäß US 7629716 B2 ist der Stator einer elektromagnetischen Einrichtung in einem festen Phasenwechselmaterial eingebettet, das zudem eine Heatpipe einschließt.

US 5,818,131 A offenbart:
Zu kühlende Komponente mit einer Kühleinrichtung zur Kühlung besagter Komponente, die Kühleinrichtung umfassend eine Kombination aus wenigstens zwei Phasenwechselmaterialien, die einen reversiblen, thermisch induzierbaren, endothermen Phasenübergang bei einer Phasenübergangstemperatur aufweisen, wobei eine erste Phasenübergangstemperatur eines ersten Phasenwechselmaterials oberhalb von 40° C liegt und eine zweite Phasenübergangstemperatur eines zweiten Phasenwechselmaterials oberhalb der ersten Phasenübergangstemperatur und oberhalb des unkritischen Betriebstemperaturbereichs liegt, und wobei wenigstens eines der Phasenwechselmaterialien innerhalb eines abgeschlossenen Volumens vorliegt. Die DE 4335848 A1 offenbart eine Kühlung für eine Wechselstrommaschine, die ein zirkulierendes Kühlmittel mit PCM-gefüllten Speicherzellen kombiniert. Die Phasenübergangstemperatur der PCMs liegt unterhalb einer kritischen Temperatur von in der Wechselstrommaschine verbauten Permanentmagneten.

Ein weiterer Problemkreis elektrischer Maschinen betrifft die sensorische Temperaturüberwachung der Maschine beziehungsweise ihrer Komponenten. Zur Temperaturüberwachung von Wickelköpfen von Statoren werden üblicherweise Sensoren, meist geschützt durch eine PTFE-Umhüllung, in die Wicklung eingebracht. Die Sensoren umfassen im einfachsten Fall ein Bimetall, zumeist aber einen Halbleiter ("Kaltleiter" PTC oder "Heißleiter" NTC) oder einen Platinwiderstand (PT100). In der genannten Reihenfolge steigt die Genauigkeit des Sensors, jedoch auch seine Kosten. Mit Ausnahme des Bimetallsensors nutzen alle Systeme die vorzugsweise lineare Zunahme des Ohm'schen Widerstands mit der Temperatur. Ideale Sensoren sollten eine möglichst lineare Abhängigkeit zwischen Temperatur und Widerstand im interessierenden Temperaturbereich aufweisen, das heißt eine möglichst lineare Kennlinie, und schnell auf die Temperaturänderung ansprechen, um rasch eine Kühlmaßnahme auszulösen. Die bekannten Sensoren weisen häufig keine lineare Kennlinie über einen größeren Temperaturbereich, beispielsweise von -20 bis 200 °C auf. Zudem sind schnellere Ansprechverhalten und längere Lebensdauern der Sensoren wünschenswert.

Der Erfindung liegt nun die Aufgabe zugrunde, eine elektrische Maschine, beispielsweise einen Elektromotor oder einen Generator, mit einer zu kühlenden Komponente und mit einer Kühleinrichtung, und insbesondere für einen Stator einer elektrischen Maschine, bereitzustellen, die eine verbesserte und zuverlässige Kühlung ermöglicht. Idealerweise sollte die Kühleinrichtung zudem eine einfache Implementierung einer sensorischen Temperaturerfassung erlauben.

Diese Aufgaben werden zumindest teilweise durch eine elektrische Maschine mit einer zu kühlenden Komponente und einer Kühleinrichtung gemäss Anspruch 1 gelöst. Bevorzugte Ausgestaltungen der Erfindung ergeben sich aus den in den Unteransprüchen genannten Merkmalen.

Durch die erfindungsgemäße Kombination zumindest zweier PCMs erfolgt eine mehrstufige Kühlung der betroffenen Komponente, wobei die erste Kühlstufe durch den Phasenübergang des ersten Phasenwechselmaterials realisiert wird und aufgrund der Lage der ersten Phasenübergangstemperatur Tₜᵣ₁ im unkritischen Betriebstemperaturbereich der Komponente eine Wärmeabfuhr im Normalbetrieb sichergestellt wird. Dabei wird im Rahmen der Erfindung unter einem unkritischen (oder normalen) Betriebstemperaturbereich ein Bereich verstanden, bei dem, auch bei langfristigem oder dauerhaftem Vorliegen keine Materialschädigung der Komponente zu erwarten ist. Insbesondere entspricht der unkritische Betriebstemperaturbereich dem gesamten (zulässigen) Betriebskennfeld der Komponente beziehungsweise der elektrischen Maschine, welches im Falle eines Elektromotors etwa durch die zulässigen Lasten und Drehzahlen definiert ist. Durch das zweite Phasenwechselmaterial, dessen Phasenübergangstemperatur Tₜᵣ₂ beispielsweise mindestens 20 K, insbesondere mindestens 25 K, oberhalb der Phasenübergangstemperatur Tₜᵣ₁ des ersten Phasenwechselmaterials liegt, erfolgt eine zweite, bei höheren Temperaturen einsetzende Kühlstufe. Erfindungsgemäss liegt die Übergangstemperatur des zweiten PCMs bei einer Temperatur, die oberhalb des normalen Betriebstemperaturbereichs liegt, wobei die zweite Übergangstemperatur jedoch kurzfristig (z.B. ≤ 1 min) tolerierbar ist, deren langfristiges Anhalten jedoch zu einer Schädigung der zu kühlenden Komponente führen würde.

Vorteile der inhärenten Kühlung mittels PCMs umfassen ferner einen geringen Bauraumbedarf sowie die vergleichsweise schonende Kühlung, die beispielsweise die schlagartige Temperaturabsenkung aufgrund eines abrupten Einfließens von Kühlwasser wie im Stand der Technik vermeidet. Durch das Vermeiden von schlagartigen Temperaturwechselbeanspruchungen können Risse in den Isolationsmaterialien der Wicklungen verhindert werden.

Die Anzahl der eingesetzten Phasenwechselmaterialien ist nicht auf zwei beschränkt, sondern kann im Rahmen der vorliegenden Erfindung auch größer sein. In einer bevorzugten Ausführung umfasst die Kühleinrichtung ferner ein drittes Phasenwechselmaterial mit einer dritten Phasenübergangstemperatur Tₜᵣ₃, die oberhalb der zweiten Phasenübergangstemperatur Tₜᵣ₂ liegt (beispielsweise mindestens 10 K, insbesondere mindestens 15 K, oberhalb der zweiten Phasenübergangstemperatur). Durch die Implementierung des dritten Phasenwechselmaterials wird eine dritte Kühlstufe realisiert. In einer weiteren bevorzugten Ausgestaltung liegt die dritte Phasenübergangstemperatur des dritten Phasenwechselmaterials in einem Temperaturbereich, dessen obere Grenze von einer kritischen Grenztemperatur der zu kühlenden Komponente begrenzt wird und höchstens 40 K unterhalb von dieser endet. Auf diese Weise wird bei Vorliegen einer Bauteiltemperatur nahe der kritischen Grenztemperatur die dritte Kühlstufe aktiviert.

In einer besonderen Ausgestaltung der Kühleinrichtung liegt die Phasenübergangstemperatur Tₜᵣ₁ des ersten Phasenwechselmaterials in einem Bereich oberhalb von 40° C, insbesondere von oberhalb 40 bis 140 °C, besonders bevorzugt von oberhalb 40 bis 120 °C. Im Falle einer Phasenübergangsdispersion (s.u.), in der das eigentliche Phasenwechselmaterial in feiner Verteilung in einem flüssigen Trägermedium vorliegt, bemisst sich die obere Temperaturgrenze mit Vorteil nach dem Siedepunkt (T_{b}) des Trägermediums, um ein Verdampfen desselben und somit einen Druckanstieg zu vermeiden, d.h. Tₜᵣ₁ ≤ T_{b}. Sofern es sich bei dem Trägermedium um Wasser handelt, liegt die erste Phasenübergangstemperatur Tₜᵣ₁ somit oberhalb von 40° C, insbesondere im Bereich von oberhalb 40 bis 100 °C, bevorzugt oberhalb 40 bis 80 °C. Die zweite Phasenübergangstemperatur Tₜᵣ₂ des zweiten Phasenwechselmaterials liegt vorzugsweise in einem Bereich von 120 bis 180 °C, besonders bevorzugt von 140 bis 160 °C. Schließlich ist bevorzugt vorgesehen, dass die dritte Phasenübergangstemperatur Tₜᵣ₃ des dritten Phasenwechselmaterials in einem Bereich von 140 bis 200 °C liegt, insbesondere von 160 bis 180 °C. Die vorgenannten Temperaturbereiche sind insbesondere auf die Kühlung eines Elektromotors, insbesondere für den Fahrzeugantrieb, abgestimmt, dessen übliche Betriebstemperatur in einem Bereich von 100 bis 140 °C liegt. Der Temperaturbereich zwischen 140 und 160 °C stellt dagegen einen vom Normalbetrieb abweichenden Bereich dar, der an sich -jedenfalls kurzfristig - noch nicht kritisch ist, jedoch eine vermehrte Wärmeabfuhr wünschenswert macht, um einer weiteren Temperaturerhöhung entgegenzuwirken. Die obere Temperaturgrenze des dritten PCM von 180 °C, allerhöchstens von 200 °C, entspricht einer kritischen Grenztemperatur von heutigen Elektromotoren, deren längerfristiges Anliegen schädigend wirkt.

Die Phasenwechselmaterialien weisen einen reversiblen thermischen Phasenübergang auf, wobei bei Erreichen/Überschreiten der Phasenübergangstemperatur des Materials Wärmeenergie verbraucht wird und latent im Material gespeichert wird. Dabei bleibt die Temperatur solange konstant bei der Phasenübergangstemperatur, bis das gesamte PCM den Phasenübergang vollzogen hat. Erst dann führt eine weitere Wärmezufuhr zu einer weiteren Temperaturerhöhung des PCMs und der zu kühlenden Komponente. Es versteht sich, dass bei Abkühlen unterhalb der Phasenübergangstemperatur der Phasenübergang exotherm verläuft. Vorzugsweise werden im Rahmen der vorliegenden Erfindung nur solche Phasenübergänge genutzt, die keine gasförmigen Zustände des PCMs einschließen, da der Übergang in die Gasphase mit einer unvorteilhaften Druckerhöhung einhergeht und Gase zudem eine geringe Wärmekapazität aufweisen. Vorzugsweise kommen die Phasenübergänge fest-flüssig oder festfest zum Einsatz. Vorzugsweise trifft dies auf die Phasenübergänge sämtlicher der eingesetzten Phasenwechselmaterialien zu. Zu solchen Übergängen zählen Schmelzübergänge (etwa bei Polymeren, Metallen oder deren Legierungen oder niedermolekularen Verbindungen), Rekristallisationsübergänge (etwa bei Polymeren, Metallen oder deren Legierungen) und Lösungsübergänge (beispielsweise von übersättigten Salzlösungen oder durch das Freisetzen von Kristallwasser bei Salzhydraten). Sofern eine Änderung der elektrischen Leitfähigkeit mit dem Phasenübergang erwünscht ist, um durch Messung der Leitfähigkeit die Übergangstemperatur zu detektieren (s.u.), sind in der Regel festflüssig Übergänge zu bevorzugen.

Ideale PCMs sollten eine hohe Phasenübergangsenthalpie (insbesondere Schmelzenthalpie) aufweisen sowie eine hohe spezifische Wärmekapazität, so dass sie auch außerhalb des Phasenübergangs eine Kühlwirkung aufweisen. Die Wärmeleitfähigkeit der PCMs, insbesondere auch oberhalb der Phasenübergangstemperatur, sollte möglichst hoch sein. Vorzugsweise sollten die PCMs entsprechend ihres Betriebseinsatzes chemisch und physikalisch stabil sein, kongruent schmelzen, einen geringen Dampfdruck aufweisen, einen reproduzierbaren und reversiblen Phasenübergang aufweisen und dabei eine möglichst geringe Unterkühlung (Hysterese) zeigen. Grundsätzlich kommen als Phasenwechselmaterialien im Rahmen der vorliegenden Erfindung Metalle, Metalllegierungen, organische Polymere, niedermolekulare organische oder anorganische Verbindungen, anorganische Salze oder Salzhydrate in Frage. Dabei kann das Phasenwechselmaterial auch in verkapselter Form vorliegen und die Kapseln in einem (im gesamten Betriebsbereich flüssigen) Trägermedium wie Wasser dispergiert vorliegen. Diese Dispersionen (PCS für *phase change slurry*) haben einerseits den Vorteil, dass durch das Trägermedium eine zusätzliche hohe spezifische Wärmekapazität bereitgestellt wird, die für eine kontinuierliche Wärmeaufnahme sorgt. Ein weiterer Vorteil der Dispersionen ist darin zu sehen, dass auch oberhalb des Phasenübergangs des gekapselten und erstarrten PCMs die Dispersion fließfähig und damit förderbar bleibt. Beispielsweise sind in DE 19749731 A1 und EP 2043773 B1 mikroverkapselte Paraffine beschrieben, die im Rahmen der Erfindung, insbesondere für das erste Phasenwechselmaterial, vorteilhaft eingesetzt werden können. Aus DD 294964 A5 sind Salzhydrate bekannt, die vorliegend ebenfalls Verwendung als PCM finden können.

Gemäß einer besonders bevorzugten Ausführung der Erfindung umfasst die Kühleinrichtung ferner Erfassungsmittel zur Erfassung des Phasenübergangs wenigstens eines der Phasenwechselmaterialien. Vorzugsweise wird der Phasenübergang des zweiten und/oder des dritten Phasenwechselmaterials durch das/die Erfassungsmittel erfasst, besonders bevorzugt der Phasenübergang des zweiten und des dritten Phasenwechselmaterials. Da die Phasenübergangstemperatur des jeweiligen PCMs bekannt ist, kann durch die Detektion des Phasenübergangs das Vorliegen der Phasenübergangstemperatur ermittelt werden. Somit weist das Erfassungsmittel die Funktion eines punktuellen Temperatursensors auf. Beispielsweise kann der Phasenübergang vieler Phasenwechselmaterialien über die Messung der elektrischen Leitfähigkeit erfolgen, da der Phasenübergang häufig mit einer sprunghaften Änderung der Leitfähigkeit einhergeht. Dies trifft insbesondere auf viele fest-flüssig Übergänge zu. Gegenüber den im Stand der Technik verwendeten Temperatursensoren ist die erfindungsgemäße Form der Temperatur-erfassung sehr robust, leicht umsetzbar und weist ein schnelles Ansprechverhalten auf.

Nach einer weiteren vorteilhaften Ausgestaltung umfasst die Kühleinrichtung eine Steuer- oder Regeleinrichtung, die eingerichtet ist, wenigstens eine Maßnahme zur Verhinderung eines weiteren Temperaturanstiegs der zur kühlenden Komponente auszulösen, wenn durch das/die Erfassungsmittel ein Phasenübergang eines der Phasenwechselmaterialien erfasst wird. Dabei kann die Maßnahme etwa eine aktive Kühlmaßnahme umfassen, beispielsweise eine verstärkte Kühlmittelzirkulation, ein Herunterregeln der elektrischen Maschine und/oder ein Abschalten der elektrischen Maschine. Zudem kann die Kühlmaßnahme davon abhängig gemacht werden, welches der Phasenwechselmaterialien seine Phasenübergangstemperatur erreicht hat, das heißt davon, welche Temperatur im Stator der E-Maschine erreicht wurde. Wird beispielsweise ein Phasenübergang des zweiten Phasenwechselmaterials detektiert, das heißt die zweite Phasenübergangstemperatur wurde erreicht, kann ein Herunterregeln der elektrischen Maschine die Folge sein. Wenn hingegen ein Phasenübergang des dritten Phasenwechselmaterials, das heißt die dritte Phasenübergangstemperatur ermittelt wird, kann ein Abschalten der elektrischen Maschine erfolgen, um Ihre Schädigung zu verhindern.

In bevorzugter Ausgestaltung der Erfindung liegt zumindest eines der Phasenwechselmaterialien, vorzugsweise das erste Phasenwechselmaterial, in dauerhaft förderfähiger (zirkulationsfähiger) Form vor. Wie vorstehend bereits ausgeführt, kann dies durch eine Suspension oder Dispersion eines PCMs in einem flüssigen Trägermedium, das selbst kein PCM ist, realisiert werden, das heißt durch eine so genannte PCM-Dispersion (PCS). Vorzugsweise können die PCM-Teilchen in gekapselter Form, insbesondere in Polymerkapseln, vorliegen. In dieser Ausgestaltung umfasst die Kühleinrichtung ferner eine Fördereinrichtung zur Umwälzung des dauerhaft förderfähigen Phasenwechselmaterials zu einer externen Wärmesenke. Beispielsweise kann das dauerhaft förderfähige Phasenwechselmaterial zu einem Wärmetauscher geführt werden, wo seine Wärmeenergie abgegeben und anderweitig genutzt werden kann. Im Falle eines Fahrzeugs kann beispielsweise die Wärmeenergie zur Heizung eines Fahrzeuginnenraums oder zur Erwärmung/Vorerwärmung anderer Aggregate oder Komponenten genutzt werden.

Erfindungsgemäss ist eine elektrische Maschine mit einer zu kühlenden Komponente sowie einer Kühleinrichtung gemäß der vorliegenden Erfindung vorgesehen.

Bei der zu kühlenden Komponente handelt es sich insbesondere um einen Stator und/oder einen Rotor der elektrischen Maschine, vorzugsweise um einen Wickelkopf von solchen.

Im Falle eines Stators als zu kühlender Komponente, umfasst die Kühleinrichtung in bevorzugter Ausgestaltung eine, einen Wickelkopf des Stators zumindest teilweise umschließende Haube, welche die Phasenwechselmaterialien umhüllt und nach außen abdichtet. Die Haube ist vorzugsweise aus einem elastomeren Polymermaterial ausgebildet, beispielsweise aus Silikon.

In weiterer bevorzugter Ausführungsform liegt wenigstens eines der Phasenwechselmaterialien, insbesondere das erste Phasenwechselmaterial, in einer dauerhaft förderfähigen Form vor, beispielsweise als PCM-Suspension oder-Dispersion (PCS), und umströmt den Wickelkopf des Stators. Vorzugsweise ist in diesem Fall eine dünne Trennschicht eines insbesondere elastomeren Materials (z.B. Silikon) zwischen Wickelkopf und PCS vorgesehen, sodass das PCM nicht direkt mit den Wicklungen in Kontakt tritt, d.h. der Wärmeaustausch findet durch die dünne Trennschicht statt. Hierdurch wird eine große Kontaktfläche und somit eine hohe Kühlleistung zwischen dem Wickelkopf und dem förderfähigen PCM erzielt. Bevorzugt ist in diesem Zusammenhang die bereits angesprochene Fördereinrichtung realisiert, die eine ständige oder bedarfsweise Umwälzung des dauerhaft förderfähigen PCMs ermöglicht.

Erfindungsgemäss liegt wenigstens eines der PCMs, insbesondere das zweite und/oder das dritte Phasenwechselmaterial innerhalb eines abgeschlossenen Volumens vor, das in thermischen Kontakt mit der zu kühlenden Komponente steht. Hierbei wird keine Förderung/Umwälzung des betreffendes PCMs vorgenommen, vielmehr bleibt dieses ortsfest bei der zu kühlenden Komponente. In dieser Ausführung wird das entsprechende Phasenwechselmaterial nicht gefördert, sondern ist ortsfest an der zu kühlenden Komponente angeordnet. Beispielsweise kann im Falle eines Wickelkopfs das zweite und/oder das dritte Phasenwechselmaterial jeweils in einem umlaufend geschlossenen Schlauch vorliegen, der den Wickelkopf an seinem inneren und/oder äußeren Umfang kontaktiert. Alternativ kann das betreffende Phasenwechselmaterial in beispielsweise stift- oder kugelförmigen Einsätzen vorliegen, die in oder an der Statorwicklung angebracht sind.

Die Erfindung wird nachfolgend in Ausführungsbeispielen anhand der zugehörigen Zeichnungen erläutert. Es zeigen:
- Figur 1A-B: jeweils einen Stator eines Elektromotors in einer perspektivischen Ansicht;
- Figur 2: eine schematisierte Schnittansicht eines Wickelkopfs eines Stators mit einer Kühleinrichtung gemäß einer ersten Ausgestaltung der Erfindung;
- Figur 3: eine Schnittansicht des Wickelkopfs und der Kühleinrichtung aus Figur 2 nach Schnitt A-A;
- Figur 4: eine perspektivische und teilweise aufgeschnittene Ansicht eines Wickelkopfs und einer Kühleinrichtung gemäß einer zweiten Ausgestaltung der Erfindung;
- Figur 5: eine schematisierte Schnittansicht eines Wickelkopfs eines Stators mit einer Kühleinrichtung gemäß einer dritten Ausgestaltung der Erfindung.

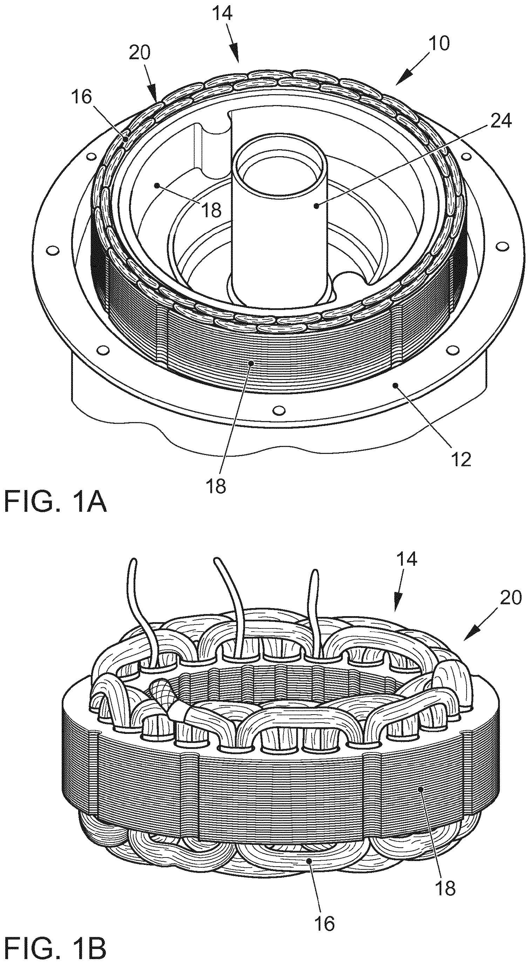

Nachfolgend wird die vorliegende Erfindung am Beispiel einer elektrischen Maschine mit einer zu kühlenden Komponente und einer Kühleinrichtung für einen Elektromotor beziehungsweise seines Stators näher erläutert werden. Typische prinzipielle Strukturen eines Stators für einen Elektromotor werden anhand der Figuren 1A und 1B erläutert.

Figur 1A zeigt einen insgesamt mit 10 bezeichneten Elektromotor, wobei ein Teil seiner wesentlichen Komponenten, beispielsweise sein Rotor nicht dargestellt ist. Der Elektromotor 10 weist ein Motorgehäuse 12 auf, von dem hier lediglich der geöffnete untere Gehäuseteil dargestellt ist, der mit einem nicht dargestellten oberen Gehäuseteil beispielsweise über eine Flanschverbindung verschraubt ist. In dem Gehäuse 12 ist ein ortsfester Stator 14 angeordnet. Der Stator 14 umfasst eine Wicklung 16 sowie ein Statorkern 18, welcher in der Regel aus einem laminierten Blechpaket besteht. In der in Figur 1A gezeigten Ausführung weist der Statorkern 18 zwei Ringe auf, welche innen- sowie außenseitig an die Statorwicklung 16 anschließen. In der Ausführung gemäß Figur 1B weist das Blechpaket des Statorkerns 18 eine Vielzahl von Durchgangsöffnungen oder Nuten auf, durch die die Wicklung 16 hindurchführt. Die ober- und unterhalb des Statorkerns 18 hinausragenden Bereiche der Wicklung 16 werden auch als Wickelkopf 20 bezeichnet. Im Inneren des Stators 14 ist ein hier nicht dargestellter Rotor drehbar um einen Schaft 24 gelagert und treibt eine in dem Schaft 24 gelagerte Welle an (nicht dargestellt).

Die Wicklung 16 umfasst üblicherweise einen Kupferdraht, der eine durchgehende mehrschichtige Beschichtung mit Drahtlacken aufweist. Dabei dient die so genannte Primärbeschichtung der elektrischen Isolierung und basiert üblicherweise auf Polyimiden oder Polyesterimiden. Die darauf befindliche Sekundärbeschichtung dient der mechanischen und geometrischen Stabilisierung der Wicklung, um ein Verrutschen, Verschieben oder Aufscheuern zu verhindern; dem Schutz vor Versprödung und Rissbildung; dem Schutz von Medieneinwirkung durch Salzwasser, Ölen oder anderen Betriebsstoffen; der elektrischen Isolation und zusätzlich auch der Wärmeableitung. Während die zentralen, länglichen Wickelschenkel durch den Statorkern 18 noch gut gekühlt werden, trifft dies auf den freiliegenden Wickelkopf 20 nicht zu. Infolgedessen können im Wickelkopf 20 besonders hohe Temperaturspitzen von 200 °C und mehr auftreten, sofern keine kühlenden Maßnahmen getroffen werden. Jedoch sind die heute kommerziell verfügbaren Materialien für die Isolationswerkstoffe maximal bis etwa 180 °C dauerhaft einsetzbar. Aus diesem Grund sieht die vorliegende Erfindung eine Kühleinrichtung vor, die anhand der nachfolgenden Zeichnungen näher erläutert werden soll.

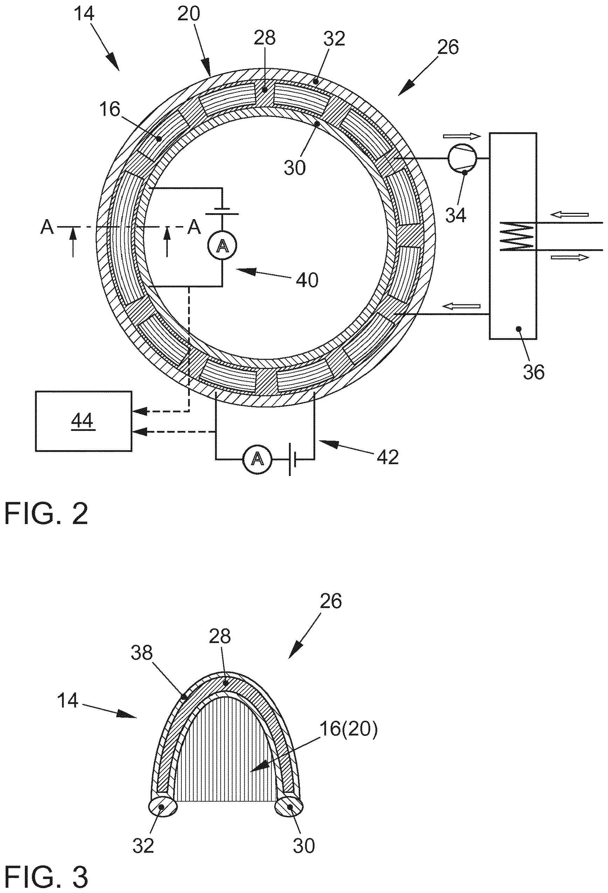

Eine erste Ausgestaltung der vorliegenden Erfindung wird anhand der Zeichnungen 2 und 3 dargestellt. Figur 2 zeigt einen Horizontalschnitt durch einen Wickelkopf eines Stators 14 und Figur 3 zeigt eine Querschnittsansicht gemäß Schnitt AA nach Figur 2, wobei jedoch nur der Wickelkopf des Stators dargestellt ist. Der Stator 14 ist mit einer erfindungsgemäßen, insgesamt mit 26 bezeichneten Kühleinrichtung ausgestattet. Die Kühleinrichtung 26 umfasst eine Kombination aus hier drei Phasenwechselmaterialien 28, 30, 32, welche in thermischem Kontakt mit dem Stator 14 stehen. Jedes der Phasenwechselmaterialien weist einen reversiblen, thermisch induzierbaren, endothermen Phasenübergang bei einer individuellen Phasenübergangstemperatur Tₜᵣ auf. Dabei liegt die erste Phasenübergangstemperatur Tₜᵣ₁ eines ersten Phasenwechselmaterials 28 innerhalb eines unkritischen, im normalen Betrieb des Stators 14 auftretenden Betriebstemperaturbereichs oberhalb von 40° C, beispielsweise in einem Bereich von oberhalb 40 bis 140 °C (oberhalb 40 bis 100 °C im Falle eines PCS auf wässriger Basis), vorzugsweise von oberhalb 40 bis 120 °C (bzw. oberhalb 40 bis 80 °C bei PCS). Ein zweites Phasenwechselmaterial 30 weist eine zweite Phasenübergangstemperatur Tₜᵣ₂ auf, welche oberhalb der ersten Phasenübergangstemperatur Tₜᵣ₁ liegt (Tₜᵣ₂ > Tₜᵣ₁). Vorzugsweise liegt Tₜᵣ₂ bei einer Temperatur, die vom Normalbetrieb abweicht, aber bei kurzfristigem Vorliegen noch nicht kritisch oder materialschädigend ist. Beispielsweise liegt die zweite Übergangstemperatur Tₜᵣ₂ im Bereich von 120 bis 180 °C, vorzugsweise von 140 bis 160 °C. Ein drittes Phasenwechselmaterial 32 der Kühleinrichtung 26 weist eine dritte Phasenübergangstemperatur Tₜᵣ₃ auf, die oberhalb der zweiten Phasenübergangstemperatur Tₜᵣ₂ liegt (Tₜᵣ₃ > Tₜᵣ₂). Vorzugsweise liegt Tₜᵣ₃ bei einer vom Normalbetrieb stark abweichenden und bei längerer Einwirkung bereits kritischen, materialschädigenden Temperatur. Beispielsweise liegt Tₜᵣ₃ in einem Bereich von 140 bis 200 °C, vorzugsweise von 160 bis 180 °C. Geeignete Materialien für die Phasenwechselmaterialien 28, 30, 32 werden weiter unten erläutert. Insgesamt ergibt sich also für die Phasenübergangstemperaturen bei den genannten Phasenwechsel-materialien die folgende Abstufung: (Tₜᵣ₃ > Tₜᵣ₂ > Tₜᵣ₁).

In dem vorliegenden Beispiel handelt es sich bei dem ersten Phasenwechselmaterial 28 um ein dauerhaft fließ- und damit förderfähiges Material, beispielsweise einer Dispersion, in welcher Phasenwechselmaterialien in fein verteilter Form enthalten sind (PCS, siehe unten). Das erste Phasenwechselmaterial 28 umhüllt die Wicklung 16 des Wickelkopfs 20 und ist von diesem lediglich durch eine dünne, nicht dargestellte Trennschicht getrennt. Mittels einer Fördereinrichtung 34 wird das erste Phasenwechselmaterial 28 einer Wärmesenke 36 zugeführt, über welche das Material 28 seine Wärmeenergie abgibt. Bei der Wärmesenke handelt es sich beispielsweise um einen Wärmetauscher, bei dem die Wärme an ein flüssiges Kühlmedium oder an einen Luftstrom abgegeben wird. Die über den Wärmetauscher 36 abgegebene Wärme wird vorzugsweise für externe Heizzwecke genutzt. Dies kann im Falle eines Kraftfahrzeugs eine Innenraumheizung sein oder die Erwärmung anderer Fahrzeugkomponenten betreffen.

Das zweite und dritte Phasenwechselmaterial 30, 32 liegt in hermetisch abgeschlossenen Volumina vor, hier beispielsweise in umlaufenden, geschlossenen Schläuchen, welche die Wicklung 16 physisch kontaktieren oder zumindest über andere Komponenten in thermischen Kontakt zur Wicklung 16 stehen. Im dargestellten Beispiel befindet sich das zweite PCM 30 in einem die Wicklung 16 innenseitig flankierenden Schlauch und das dritte PCM 32 in einem die Wicklung 16 von außen flankierenden Schlauch.

Die Kühleinrichtung 26 umfasst ferner eine Haube 38 (Fig. 3, in Fig. 2 nicht dargestellt), welche zumindest den Wickelkopf 20 des Stators 14 sowie das erste Phasenwechselmaterial 28 umschließt. Die Haube 38 besteht vorzugsweise aus einem elastischen Material, beispielsweise Silikon, und weist in der Darstellung der Figur 3 beispielsweise die Gestalt eines umgedrehten doppelwandigen "U" auf, dessen spaltförmiger Hohlraum mit dem ersten Phasenwechselmaterial 28 gefüllt ist. Die äußere Wandung der Haube 38 weist eine Stärke auf, welche die notwendige mechanische Stabilität gewährleistet. Optional kann in Abweichung von Figur 3 die Haube 38 zusätzlich auch die Volumina der zweiten und dritten Phasenwechselmaterialien 30, 32 einschließen. Die Haube kann durch ein polymerisierendes Spritzgussverfahren hergestellt werden.

In Figur 2 sind ferner Erfassungsmittel 40 und 42 angedeutet, welche eingerichtet sind, einen Phasenübergang des zweiten PCMs 30 beziehungsweise des dritten PCMs 32 zu erfassen. Im vorliegenden Beispiel messen die Erfassungsmittel 40, 42 die elektrische Leitfähigkeit des zweiten und dritten Phasenwechselmaterials 30, 32. Hierzu wird über zwei, das jeweilige Phasenwechselmaterial 30, 32 kontaktierende Elektroden eine elektrische Spannung über eine kurze Strecke des PCMs angelegt und die Stromstärke gemessen. Sobald das jeweilige PCM 30, 32 seine Phasenübergangstemperatur Tₜᵣ₂ beziehungsweise Tₜᵣ₃ erreicht hat, beginnt der Phasenübergang, beispielsweise ein Schmelzübergang, der die elektrische Leitfähigkeit des Materials und somit die gemessene Stromstärke ansteigen lässt. Dieser Anstieg der Leitfähigkeit ist somit ein Indikator für das Vorliegen der jeweiligen Übergangstemperatur.

Die Erfassungsmittel 40, 42 geben ein, mit der erfassten Leitfähigkeit korrelierendes Ausgangssignal aus (unterbrochene Pfeile), das an eine Steuer- oder Regeleinrichtung 44 weitergeleitet wird, die eingerichtet ist, wenigstens eine Maßnahme zur Verhinderung eines weiteren Temperaturanstiegs der zu kühlenden Statorwicklung 16 auszulösen, wenn das Erfassungsmittel 40 und/oder 42 einen Phasenübergang der Phasenwechselmaterialien 30 beziehungsweise 32 erfasst. Diese Maßnahmen werden weiter unten noch näher erläutert.

Anders als in Figur 3 dargestellt, kann die Haube 38 auch eine massivere Gestalt mit einer massiven Außenwandung aufweisen.

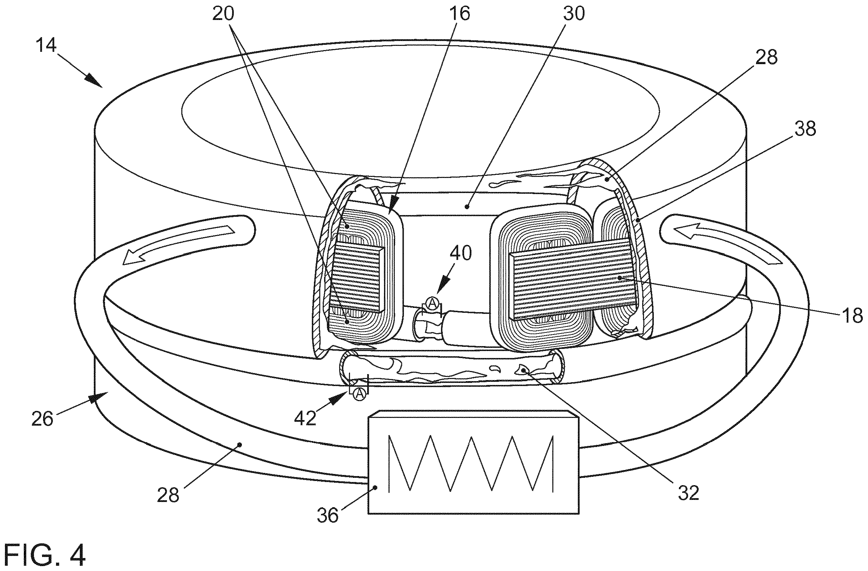

Figur 4 zeigt eine Variante der in den Figuren 2 und 3 dargestellten Ausführung der Erfindung. In der in Figur 4 dargestellten Ausführung wird der gesamte Stator 14 inklusive seines Statorkerns 18 durch die erfindungsgemäße Kühleinrichtung 26 gekühlt. Dabei umschließt die Haube 38 mit dem PCM 28 den gesamten Stator 14. Die das zweite und das dritte PCM 30, 32 umschließenden Schläuche sind lediglich im Bereich des unteren Wickelkopfs 20 der Wicklung 16 angeordnet sind.

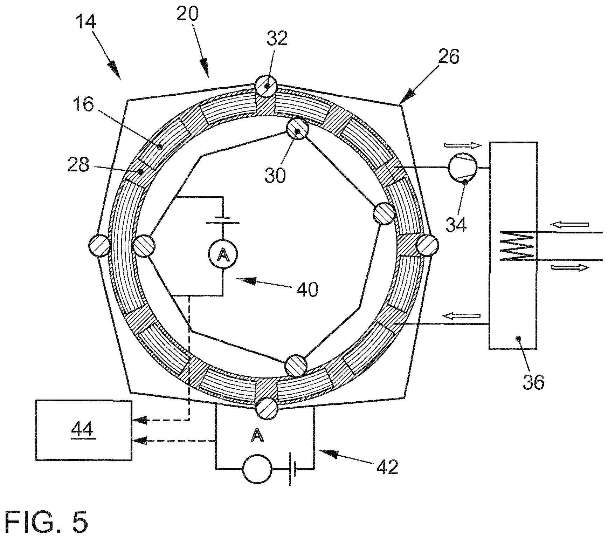

Figur 5 zeigt eine weitere Ausgestaltung der erfindungsgemäßen Kühleinrichtung 26 in einer horizontalen Schnittansicht durch den Wickelkopf 20 des Stators 14. Diese Ausführung weicht von der in Figur 2 dargestellten Ausführung im Wesentlichen in der Anordnung des zweiten Phasenwechselmaterials 30 und des dritten Phasenwechselmaterials 32 ab. Insbesondere sind diese in dieser Ausführung in kleinen, beispielsweise stift- oder kugelförmigen abgeschlossenen Volumina in der Wicklung 16 eingelassen und/oder von außen an dieser angeordnet. Zur Erfassung der Phasenübergänge des zweiten und des dritten PCMs 30, 32 sind die entsprechenden Stromkreise des ersten und des zweiten Erfassungsmittels 40, 42 mit mehreren der PCM-Volumina verbunden. Grundsätzlich kann es jedoch auch ausreichend sein, die elektrische Leitfähigkeit in einem einzelnen Volumen zu erfassen.

Die in den Figuren 2 bis 5 dargestellten Kühleinrichtungen 26 zeigen folgende Funktionsweise.

Im Betrieb der elektrischen Maschine 10 erfolgt eine kontinuierliche oder diskontinuierliche Umwälzung des ersten Phasenwechselmaterials 28 mittels der Fördereinrichtung 34. Da das erste PCM 28 als Dispersion (PCS), insbesondere mikroverkapselt, in einem flüssigen Trägermedium vorliegt, ist dieses auch unterhalb seiner Phasenübergangstemperatur von Tₜᵣ₁ = oberhalb 40-100 °C förderfähig, auch wenn es selbst einen festen Zustand aufweist. Somit ändert sich die Gesamtviskosität des PCS beim Phasenübergang praktisch nicht, sondern lediglich die Viskosität des mikroverkapselten PCM. Da das erste PCM 28 eine

Phasenübergangstemperatur Tₜᵣ₁ im bzw. unterhalb des normalen Betriebsbereichs des Elektromotors 10 und dessen Stators 14 aufweist (normale Betriebstemperatur ca. 100-140 °C), kommt es bereits im normalen Betrieb zum Erreichen und Überschreiten der Phasenübergangstemperatur Tₜᵣ₁, so dass das erste PCM 28 einen endothermen Phasenübergang, beispielsweise einen Schmelzübergang von fest nach flüssig erfährt, so dass es seiner Umgebung (der Wicklung 16) Wärme entzieht und diese kühlt. Dabei bleibt während des Phasenübergangs die Temperatur des PCMs 28 konstant. Erst wenn das gesamte PCM 28 geschmolzen ist, kommt es zu einer weiteren Erwärmung des PCMs 28. Die von der Wicklung 16 aufgenommene Wärmeenergie wird am Wärmetauscher 36 wieder an ein Kühlmedium abgegeben, so dass das PCM 28 wieder auf unterhalb von Tₜᵣ₁ abgekühlt wird und den nun exothermen Phasenübergang (z.B. von flüssig nach fest) vollzieht. Die freigesetzte Latentwärme wird ebenfalls am Wärmetauscher 36 abgegeben. Das gekühlte und erstarrte PCM 28 strömt wieder zur Wicklung 16 und der Kreislauf beginnt von neuem.

Sofern es zu einem Temperaturanstieg in der Wicklung 16 kommt, die vom Normalbetrieb abweicht und die Phasenübergangstemperatur Tₜᵣ₂ des zweiten PCMs 30 erreicht, kommt es zum Phasenübergang des zweiten PCMs 30, beispielsweise einem Schmelzen. Durch die Endothermie dieses Übergangs wird der Wicklung 16 Wärmeenergie entzogen und im PCM 30 latent gespeichert und die Wicklung 16 somit gekühlt. Ferner wird der Phasenübergang aufgrund des Anstiegs der elektrischen Leitfähigkeit des PCMs 30 durch das Erfassungsmittel 40 erfasst. Sobald dieses der Fall ist, erhält die Steuereinrichtung 44 somit die Information, dass die Wicklung 16 die Temperatur Tₜᵣ₂ aufweist, und löst wenigstens eine Maßnahme zur Verhinderung eines weiteren Temperaturanstiegs aus. Diese Maßnahme kann beispielsweise ein leistungsmäßiges Herunterregeln der elektrischen Maschine 10 umfassen. Alternativ oder zusätzlich kann auch eine aktive Kühlmaßnahme erfolgen, beispielsweise eine Erhöhung der Umwälzleistung der Fördereinrichtung 34 oder die Zuschaltung einer weiteren Kühleinrichtung. Das Erreichen der Temperatur Tₜᵣ₂ führt somit einerseits zur Kühlung durch den endothermen Phasenübergang des zweiten PCMs 30 und andererseits zu einer weiteren kühlenden Maßnahme, z.B. Herunterregeln des Motors.

Sofern es zu einem noch weiteren Temperaturanstieg in der Wicklung 16 kommt, die stark vom Normalbetrieb abweicht und die Phasenübergangstemperatur Tₜᵣ₃ des dritten PCMs 32 erreicht, kommt es zum Phasenübergang des dritten PCMs 32, beispielsweise einem Schmelzen. Durch die Endothermie dieses Übergangs wird der Wicklung 16 Wärmeenergie entzogen und im PCM 32 latent gespeichert und die Wicklung 16 somit gekühlt. Ferner wird der Phasenübergang aufgrund des Anstiegs der elektrischen Leitfähigkeit des dritten PCMs 32 durch das zweite Erfassungsmittel 42 erfasst. Sobald dieses der Fall ist, erhält die Steuereinrichtung 44 somit die Information, dass die Wicklung die Temperatur Tₜᵣ₃ aufweist, und löst wenigstens eine Maßnahme zur Verhinderung eines weiteren Temperaturanstiegs aus. Da die Temperatur Tₜᵣ₃ bereits nahe einer kritischen Temperatur ist, kann diese Maßnahme beispielsweise ein Abschalten der elektrischen Maschine 10 umfassen. Alternativ oder zusätzlich kann - wie bei dem Phasenübergang des zweiten PCMs 30 - auch eine aktive Kühlmaßnahme erfolgen, beispielsweise eine Erhöhung der Umwälzleistung der Fördereinrichtung 34 oder die Zuschaltung einer weiteren Kühleinrichtung. Das Erreichen der Temperatur Tₜᵣ₃ führt somit einerseits zur Kühlung durch den endothermen Phasenübergang des dritten PCMs 32 und andererseits zu einer weiteren kühlenden Maßnahme, z.B. weiterem Herunterregeln oder Abschalten des Motors.

Nachfolgend sollen die Anforderungen sowie geeignete Materialien für die verschiedenen PCMs erläutert werden.
1. Das erste PCM 28 ist wie erwähnt bevorzugt über den gesamten Einsatzbereich fließ- und damit förderfähig (zirkulationsfähig). Es dient somit zur inhärenten Kühlung durch seinen Phasenübergang, der im oder unterhalb des normalen Betriebsbereichs der Maschine (ca. 100 bis 140 °C) liegt, sowie zur kontinuierlichen aktiven Wärmeaufnahme und -abfuhr im Wege seiner unabhängig von einem Phasenübergang vorhandenen Wärmekapazität. Die so abgeführte Wärme kann dann anderweitig genutzt werden.
   Das PCM 28 ist bevorzugt eine PCM-Dispersion (PCS), die ein, in einem flüssigen Trägermedium dispergiertes PCM enthält, welches vorzugsweise eingekapselt ist, beispielsweise in einer Polymerhülle. Aufgrund der hohen Wärmekapazität sind geringe Strömungsgeschwindigkeit sowie geringe Kanaldurchmesser des Kreislaufs erforderlich. Bevorzugte DPS weisen eine Phasenübergangstemperatur Tₜᵣ₁ im Bereich von oberhalb 40 bis 100 °C, insbesondere von oberhalb 40 bis 80 °C auf. Es eignen sich beispielsweise wässrige mikroverkapselte Paraffin-Dispersionen, die in EP 2043773 B1 und DE 19749731 A1 beschrieben sind. Auch können, vorzugsweise wiederum mikroverkapselte, anorganische Salze und Salzmischungen verwendet werden, insbesondere Nitrate, Nitrite, Acetate, SulfateHydroxide, Halogenide, (z.B. Mg(NO₃)₂ · 6 H₂O: Tₜᵣ = 89 °C; Mischungen von Mg(NO₃)₂ · 6 H₂O und MgCl₂ · 6 H₂O oder LiNO₃: Tₜᵣ = 60-70 °C; Na-Acetat · 3 H₂O: Tₜᵣ = 58 °C; alle von K-UTEC AG Salt Technologies erhältlich).
2. Das zweite PCM 30 weist eine Phasenübergangstemperatur auf, die in einem vom Normalbetrieb abweichenden, aber noch nicht kritischen beziehungsweise materialschädigenden Temperaturbereich liegt. Dieser Temperaturbereich liegt bei heutigen Elektromotoren bei etwa 140 bis 160 °C. Das Erreichen der Phasenübergangstemperatur des zweiten PCMs 30 stellt einen ersten (unteren) Schwellenwert dar, dessen Überschreitung eine Maßnahme zur Entgegenwirkung eines weiteren Temperaturanstiegs auslöst, z.B. Herunterregeln der Maschine.
   Für das zweite PCM 30 eignen sich insbesondere Materialien, deren elektrische Leitfähigkeit sprunghaft beim Phasenübergang, insbesondere Schmelzen, ansteigen. Dieser Effekt ermöglicht die sensorische Erfassung über die Messung der Leitfähigkeit. Vorteilhaft kommen salzartige Phasenwechselmaterialien in Frage, wie anorganische Salze und Salzhydrate, ionische Flüssigkeiten bzw. Mischungen der genannten Vertreter. Beispielsweise weisen Mischungen, vorzugsweise eutektische Mischungen, der anorganischen Salze Kaliumnitrat, Natriumnitrat und Natriumnitrit eine Schmelztemperatur im Bereich von 140 bis 150 °C auf (z.B. NaNO₃/KNO₃/ NaNO₂ Tₜᵣ = 142 °C, K-UTEC AG Salt Technologies). Schmelztemperaturen von Mischungen von Kaliumnitrat und Lithiumnitrat liegen im Bereich von ca. 130-140 °C. Die organische ionische Flüssigkeit 1-Dodecyl-3-methylimidazoliumchlorid weist einen Schmelzpunkt bei etwa 150 °C auf und eignet sich somit ebenso.
3. Das dritte PCM 32 weist eine Phasenübergangstemperatur auf, die in einem vom Normalbetrieb stark abweichenden und bei längerer Einwirkung bereits kritischen, materialschädigenden Temperaturbereich liegt. Dieser Temperaturbereich liegt bei heutigen Elektromotoren bei etwa 160 bis 180 °C. Das Erreichen der Phasenübergangstemperatur des dritten PCMs 32 stellt einen zweiten (oberen) Schwellenwert dar, dessen Überschreitung eine weitere (Not)Maßnahme zur Entgegenwirkung eines weiteren Temperaturanstiegs auslöst, z.B. weiteres Herunterregeln oder sogar Abschalten des Motors (Notbetrieb).

Für das dritte PCM 32 eignen sich insbesondere Materialien, deren elektrische Leitfähigkeit sprunghaft beim Phasenübergang, insbesondere Schmelzen, ansteigen. Dieser Effekt ermöglicht die sensorische Erfassung über die Messung der Leitfähigkeit. Vorteilhaft kommen salzartige Phasenwechselmaterialien in Frage, wie anorganische Salze und Salzhydrate, ionische Flüssigkeiten bzw. Mischungen der genannten Vertreter. Beispielsweise weisen Mischungen, vorzugsweise eutektische Mischungen, der anorganischen Salze Lithiumnitrat und Natriumnitrat eine Schmelztemperatur im Bereich von 175 bis 195 °C auf. Als ionische Flüssigkeiten eignen sich beispielsweise 1-Butyl-4-methylpyridiniumchlorid (Schmelzpunkt: 162°C) und 1,3-Didecyl-2-methylimidazoliumchlorid (Schmelzpunkt: 165°C) als Material für das dritte PCM 32.

### Bezugszeichenliste

- 10: elektrische Maschine / Elektromotor
- 12: Gehäuse
- 14: Stator
- 16: Wicklung
- 18: Statorkern
- 20: Wickelkopf
- 24: Schaft
- 26: Kühleinrichtung
- 28: erstes Phasenwechselmaterial
- 30: zweites Phasenwechselmaterial
- 32: drittes Phasenwechselmaterial
- 34: Fördereinrichtung
- 36: Wärmesenke / Wärmetauscher
- 38: Haube
- 40: erstes Phasenübergangserfassungsmittel
- 42: zweites Phasenübergangserfassungsmittel
- 44: Steuer- oder Regeleinrichtung

## Patentansprüche

1. Elektrische Maschine (10) mit einer zu kühlenden Komponente (14) und mit einer Kühleinrichtung (26) zur Kühlung besagter Komponente (14) der elektrischen Maschine (10), die Kühleinrichtung (26) umfassend eine Kombination aus wenigstens zwei Phasenwechselmaterialien (PCMs), die einen reversiblen, thermisch induzierbaren, endothermen Phasenübergang bei einer Phasenübergangstemperatur (Tₜᵣ) aufweisen, wobei eine erste Phasenübergangstemperatur (Tₜᵣ₁) eines erstens Phasenwechselmaterials (28) oberhalb von 40°C und innerhalb eines unkritischen Betriebstemperaturbereichs der zu kühlenden Komponente (14) liegt und eine zweite Phasenübergangstemperatur (Tₜᵣ₂) eines zweiten Phasenwechselmaterials (30) oberhalb der ersten Phasenübergangstemperatur (Tₜᵣ₁) und oberhalb des unkritischen Betriebstemperaturbereichs liegt, wobei die zweite Phasenübergangstemperatur (Tₜᵣ₂) kurzfristig tolerierbar ist, deren langfristiges Anhalten jedoch zu einer Schädigung der zu kühlenden Komponente führen würde, wobei auch bei langfristigem
oder dauerhaften Vorliegen des unkritischen Betriebstemperaturbereichs keine temperaturbedingte Materialschädigung der Komponente zu erwarten ist und wobei wenigstens eines der Phasenwechselmaterialien (PCMs) innerhalb eines abgeschlossenen Volumens vorliegt, das in thermischem Kontakt mit der zu kühlenden Komponente (14) steht.

2. Elektrische Maschine (10) mit einer zu kühlenden Komponente (14) und mit einer Kühleinrichtung (26) nach Anspruch 1, ferner umfassend ein drittes Phasenwechselmaterial (32) mit einer dritten Phasenübergangstemperatur (Tₜᵣ₃), die oberhalb der zweiten Phasenübergangstemperatur (Tₜᵣ₂) liegt, insbesondere in einem Temperaturbereich von einer kritischen Grenztemperatur (T_{G}) der zu kühlenden Komponente (14) bis 40 K unterhalb von dieser.

3. Elektrische Maschine (10) mit einer zu kühlenden Komponente (14) und mit einer Kühleinrichtung (26) nach Anspruch 2, wobei die Phasenübergangstemperatur (Tₜᵣ) des ersten Phasenwechselmaterials (28) in einem Bereich von oberhalb 40 bis 140°C, insbesondere von oberhalb 40 bis 100°C liegt und/oder die Phasenübergangstemperatur (Tₜᵣ₂) des zweiten Phasenwechselmaterials (30) in einem Bereich von 120 bis 180°C, insbesondere von 140 bis 160°C liegt.

4. Elektrische Maschine (10) mit einer zu kühlenden Komponente (14) und mit einer Kühleinrichtung (26) nach Anspruch 2 oder 3, wobei die Phasenübergangstemperatur (Tₜᵣ₃) des dritten Phasenwechselmaterials (32) in einem Bereich von 140 bis 200°C, insbesondere von 160 bis 180°C liegt.

5. Elektrische Maschine (10) mit einer zu kühlenden Komponente (14) und mit einer Kühleinrichtung (26) nach einem der vorhergehenden Ansprüche, wobei der Phasenübergang zumindest eines der Phasenwechselmaterialien (PCMs), insbesondere sämtlicher Phasenwechselmaterialien (PCMs), ausgewählt ist aus fest-flüssig- oder festfest-Übergängen.

6. Elektrische Maschine (10) mit einer zu kühlenden Komponente (14) und mit einer Kühleinrichtung (26) nach Anspruch 2, ferner umfassend Erfassungsmittel (40, 42) zur Erfassung des Phasenübergangs wenigstens eines der Phasenwechselmaterialien (PCMs), insbesondere des zweiten Phasenwechselmaterials (PCM₂) und/oder des dritten Phasenwechselmaterials (PCM₃).

7. Elektrische Maschine (10) mit einer zu kühlenden Komponente (14) und mit einer Kühleinrichtung (26) nach Anspruch 6, ferner umfassend eine Steuer- oder Regeleinrichtung (44), die eingerichtet ist, wenigstens eine Maßnahme zur Verhinderung eines weiteren Temperaturanstiegs der zu kühlenden Komponente (14) auszulösen, wenn das Erfassungsmittel (40, 42) einen Phasenübergang eines der Phasenwechselmaterialien (PCMs) erfasst, wobei die Maßnahme, insbesondere eine aktive Kühlmaßnahme, ein Herunterregeln der elektrischen Maschine (10) und/oder ein Abschalten der elektrischen Maschine (10) umfasst.

8. Elektrische Maschine (10) mit einer zu kühlenden Komponente (14) und mit einer Kühleinrichtung (26) nach einem der vorhergehenden Ansprüche, wobei zumindest eines der Phasenwechselmaterialien (PCMs), insbesondere das erste Phasenwechselmaterial (28), in dauerhaft förderfähiger Form vorliegt, vorzugsweise als Phasenwechseldispersion (PCS), in der das Phasenwechselmaterial in dispergierter oder suspendierter Form in einem Trägermedium vorliegt, und die Kühleinrichtung (26) ferner eine Fördereinrichtung (34) zur Umwälzung dieses Phasenwechselmaterials zu einer externen Wärmesenke (36) umfasst.

9. Elektrische Maschine (10) mit einer zu kühlenden Komponente (14) und mit einer Kühleinrichtung (26) nach einem der vorhergehenden Ansprüche, wobei die zu kühlende Komponente ein Stator (14) und/oder ein Rotor ist, insbesondere ein Wickelkopf (20) des Stators (14) und/oder Rotors.

10. Elektrische Maschine (10) mit einer zu kühlenden Komponente (14) und mit einer Kühleinrichtung (26) nach einem der vorhergehenden Ansprüche, wobei wenigstens eines der Phasenwechselmaterialien (PCMs), insbesondere das erste Phasenwechselmaterial (28), in einer dauerhaft förderfähiger Form vorliegt und die zu kühlende Komponente (14) umströmt.

## Claims

1. Electrical machine (10) having a component (14) to be cooled and having a cooling device (26) for cooling said component (14) of the electrical machine (10), the cooling device (26) comprising a combination of at least two phase change materials (PCMs) which exhibit a reversible, thermally inducible, endothermic phase transition at a phase transition temperature (Tₜᵣ), wherein a first phase transition temperature (Tₜᵣ₁) of a first phase change material (28) lies above 40°C and within a non-critical operating temperature range of the component (14) to be cooled and a second phase transition temperature (Tₜᵣ₂) of a second phase change material (30) lies above the first phase transition temperature (Tₜᵣ₁) and above the non-critical operating temperature range, wherein the second phase transition temperature (Tₜᵣ₂) can be tolerated in the short term but would lead to damage to the component to be cooled if it persists in the long term, wherein, even in the case of the non-critical operating temperature range being present in the long term or permanently, no temperature-related material damage to the component is expected and wherein at least one of the phase change materials (PCMs) is present within a closed-off volume that is in thermal contact with the component (14) to be cooled.

2. Electrical machine (10) having a component (14) to be cooled and having a cooling device (26) according to Claim 1, further comprising a third phase change material (32) with a third phase transition temperature (Tₜᵣ₃) which lies above the second phase transition temperature (Tₜᵣ₂), in particular in a temperature range of from a critical limit temperature (T_{G}) of the component (14) to be cooled to 40 K below said critical limit temperature.

3. Electrical machine (10) having a component (14) to be cooled and having a cooling device (26) according to Claim 2, wherein the phase transition temperature (Tₜᵣ) of the first phase change material (28) lies in a range of from above 40 to 140°C, in particular of from above 40 to 100°C, and/the phase transition temperature (Tₜᵣ₂) of the second phase change material (30) lies in a range of from 120 to 180°C, in particular of from 140 to 160°C.

4. Electrical machine (10) having a component (14) to be cooled and having a cooling device (26) according to Claim 2 or 3, wherein the phase transition temperature (Tₜᵣ₃) of the third phase change material (32) lies in a range of from 140 to 200°C, in particular of from 160 to 180°C.

5. Electrical machine (10) having a component (14) to be cooled and having a cooling device (26) according to one of the preceding claims, wherein the phase transition of at least one of the phase change materials (PCMs), in particular all of the phase change materials (PCMs), is selected from liquid-solid or solid-solid transitions.

6. Electrical machine (10) having a component (14) to be cooled and having a cooling device (26) according to Claim 2, further comprising detection means (40, 42) for detecting the phase transition of at least one of the phase change materials (PCMs), in particular of the second phase change material (PCM₂) and/or of the third phase change material (PCM₃).

7. Electrical machine (10) having a component (14) to be cooled and having a cooling device (26) according to Claim 6, further comprising an open-loop or closed-loop control device (44) which is designed to initiate at least one measure for preventing a further increase in temperature of the component (14) to be cooled when the detection means (40, 42) detects a phase transition of one of the phase change materials (PCMs), wherein the measure comprises, in particular, an active cooling measure, down-regulation of the electrical machine (10) and/or shutdown of the electrical machine (10).

8. Electrical machine (10) having a component (14) to be cooled and having a cooling device (26) according to one of the preceding claims, wherein at least one of the phase change materials (PCMs), in particular the first phase change material (28), is present in a permanently conveyable form, preferably as a phase change dispersion (PCS) in which the phase change material is present in dispersed or suspended form in a carrier medium, and the cooling device (26) further comprises a conveying device (34) for circulating this phase change material to an external heat sink (36).

9. Electrical machine (10) having a component (14) to be cooled and having a cooling device (26) according to one of the preceding claims, wherein the component to be cooled is a stator (14) and/or a rotor, in particular an end winding (20) of the stator (14) and/or rotor.

10. Electrical machine (10) having a component (14) to be cooled and having a cooling device (26) according to one of the preceding claims, wherein at least one of the phase change materials (PCMs), in particular the first phase change material (28), is present in a permanently conveyable form and flows around the component (14) to be cooled.

## Revendications

1. Machine électrique (10) comprenant un composant (14) à refroidir et un dispositif de refroidissement (26) destiné à refroidir ledit composant (14) de la machine électrique (10), le dispositif de refroidissement (26) comprenant une combinaison d'au au moins deux matériaux à changement de phase (PCMs), qui présentent une transition de phase endothermique réversible, thermiquement inductible à une température de transition de phase (Tₜᵣ), une première température de transition de phase (Tₜᵣ₁) d'un premier matériau à changement de phase (28) étant située au-dessus de 40°C et dans une plage de températures de fonctionnement non critique du composant (14) à refroidir et une deuxième température de transition de phase (Tₜᵣ₂) d'un deuxième matériau à changement de phase (30) étant située au-dessus de la première température de transition de phase (Tₜᵣ₁) et au-dessus de la plage de températures de fonctionnement non critique, la deuxième température de transition de phase (Tₜᵣ₂) pouvant être brièvement tolérée, mais si elle devait être maintenue durablement cela conduirait à l'endommagement du composant à refroidir, aucun endommagement de matériau dû à la température du composant n'étant à craindre même avec un maintien durable ou permanent de la plage de températures de fonctionnement non critique et au moins un des matériaux à changement de phase (PCMs) étant présent dans un volume fermé qui est en contact thermique avec le composant (14) à refroidir.

2. Machine électrique (10) comprenant un composant (14) à refroidir et un dispositif de refroidissement (26) selon la revendication 1, comprenant en outre un troisième matériau à changement de phase (32) à une troisième température de transition de phase (Tₜᵣ₃) qui est située au-dessus de la deuxième température de transition de phase (Tₜᵣ₂), en particulier dans une plage de températures allant d'une température limite critique (T_{G}) du composant (14) à refroidir à 40 K au-dessous de celle-ci.

3. Machine électrique (10) comprenant un composant (14) à refroidir et un dispositif de refroidissement (26) selon la revendication 2, la température de transition de phase (Tₜᵣ) du premier matériau à changement de phase (28) étant située dans une plage allant de plus de 40 à 140°C, en particulier de plus de 40 à 100°C, et/ou la température de transition de phase (Tₜᵣ₂) du deuxième matériau à changement de phase (30) étant située dans une plage allant de 120 à 180°C, en particulier de 140 à 160°C.

4. Machine électrique (10) comprenant un composant (14) à refroidir et un dispositif de refroidissement (26) selon la revendication 2 ou 3, la température de transition de phase (Tₜᵣ₃) du troisième matériau à changement de phase (32) étant située dans une plage allant de 140 à 200°C, en particulier de 160 à 180°C.

5. Machine électrique (10) comprenant un composant (14) à refroidir et un dispositif de refroidissement (26) selon l'une des revendications précédentes, la transition de phase d'au moins un des matériaux à changement de phase (PCMs), en particulier de tous les matériaux à changement de phase (PCMs), étant choisie parmi les transitions solide-liquide ou solide-solide.

6. Machine électrique (10) comprenant un composant (14) à refroidir et un dispositif de refroidissement (26) selon la revendication 2, comprenant en outre des moyens de détection (40, 42) destinés à détecter la transition de phase d'au moins un des matériaux à changement de phase (PCMs), en particulier du deuxième matériau à changement de phase (PCM₂) et/ou du troisième matériau à changement de phase (PCM₃).

7. Machine électrique (10) comprenant un composant (14) à refroidir et un dispositif de refroidissement (26) selon la revendication 6, comprenant en outre un dispositif de commande ou de régulation (44) qui est conçu pour déclencher une mesure permettant d'empêcher une nouvelle augmentation de température du composant (14) à refroidir lorsque les moyens de détection (40, 42) détectent une transition de phase de l'un des matériaux à changement de phase (PCMs), la mesure, en particulier une mesure de refroidissement actif, comprenant la régulation vers le bas de la machine électrique (10) et/ou l'arrêt de la machine électrique (10) .

8. Machine électrique (10) comprenant un composant (14) à refroidir et un dispositif de refroidissement (26) selon l'une des revendications précédentes, au moins un des matériaux à changement de phase (PCMs), en particulier le premier matériau à changement de phase (28), se présentant sous une forme transportable en permanence, de préférence sous la forme d'une dispersion à changement de phase (PCS) dans laquelle le matériau à changement de phase est dispersé ou en suspension dans un milieu porteur, et le dispositif de refroidissement (26) comprenant en outre un dispositif de transport (34) destiné à faire circuler ce matériau à changement de phase vers un dissipateur de chaleur extérieur (36).

9. Machine électrique (10) comprenant composant (14) à refroidir et un dispositif de refroidissement (26) selon l'une des revendications précédentes, le composant à refroidir étant un stator (14) et/ou un rotor, en particulier une tête d'enroulement (20) du stator (14) et/ou du rotor.

10. Machine électrique (10) comprenant un composant (14) à refroidir et un dispositif de refroidissement (26) selon l'une des revendications précédentes, au moins un des matériaux à changement de phase (PCMs), en particulier le premier matériau à changement de phase (28), se présentant sous une forme transportable en permanence et s'écoulant autour du composant (14) à refroidir.
